(19) Europäisches Patentamt
European Patent Office
Office européen des brevets

(11) **EP 4 159 349 A1**

(12) **EUROPEAN PATENT APPLICATION**

(43) Date of publication:
**05.04.2023 Bulletin 2023/14**

(21) Application number: **21382889.0**

(22) Date of filing: **04.10.2021**

(51) International Patent Classification (IPC):
**B23B 51/08** *(2006.01)*   **B23B 51/10** *(2006.01)*

(52) Cooperative Patent Classification (CPC):
**B23B 51/08; B23B 51/108;** B23B 2220/445;
B23B 2226/27; B23B 2251/185

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **AIRBUS OPERATIONS, S.L.U.**
**28906 Getafe (Madrid) (ES)**

(72) Inventors:
• **TORRIJOS SANCHEZ-MUÑOZ, Jorge**
**28906 GETAFE (Madrid) (ES)**
• **TORRES MARTIN, Pablo**
**28906 GETAFE (Madrid) (ES)**

(74) Representative: **Herrero & Asociados, S.L.**
**Cedaceros, 1**
**28014 Madrid (ES)**

(54) **DRILL BIT FOR DRILLING A COMPOSITE MATERIAL**

(57)    A drill bit for drilling a composite material comprising at least an outer layer (9) and an inner layer (10) of dissimilar materials. The drill bit comprises a shank (6) and a drilling portion (7) which successively comprises, from a distal end of said drilling portion (7) a head (2) with a head diameter (D2) determining the diameter of an opening passage of a through hole, wherein the head further comprises a tip (8); a first discharge sector (3) with a first discharge diameter (D3) allowing the release of stress and bending in the material to be drilled, the first discharge diameter (D3) being smaller than the head diameter (D2); and a finishing sector (1) with a finishing diameter (D1) determining the through hole final diameter, the finishing diameter (D1) being larger than the first discharge diameter (D3).

**FIG. 1**

## Description

## Object of the invention

The present invention falls within the technical field of tools for drilling machines, more specifically in that of twist drills, and refers in particular to a drill bit for drilling a composite material. The drill bit is especially conceived for the drilling of those materials composed of a plurality of superimposed layers, wherein the layers have different characteristics, for example in cases in which the most external layer is made of a flexible material.

## Background of the invention

The use of composite materials in industries such as aviation or automotive is well known due to their advantageous properties such as high strength, stiffness and corrosion resistance. However, their heterogeneous structure, anisotropy and reinforcement with materials with high abrasive properties make their machining very difficult.

Among the machining operations on composite structures, drilling is the most important, particularly through holes that can be used for assembly purposes. The most commonly used drilling method is that using twist drills. To reduce the impact of a tool in the process of drilling composite materials, it is advisable to use a small chisel edge drill. The phenomenon that creates most problems in the composite drilling process is delamination resulting from a drilling load that exceeds the value of the interlaminar force.

To reduce the negative effect of the composite material properties on the quality of drilling operations, some support is used in the drilling portion or suitably modified tools, such as saw bits or trepanning bits. Another method is to drill in two steps: an initial and a final step.

In the specific case of composite materials in which the last layer of material is flexible, as well as when the total thickness of the material is very reduced, bending phenomena may occur during drilling or axial drilling procedures. In this case, flexible is understood to mean any material that is so elastic that it does not deform plastically during the axial drilling process. Thus, the force exerted with the tip of the drill bit causes the flexible material to move and/or deform during drilling, resulting in an oval-shaped and/or irregular shaped hole instead of a circular hole.

One of the possible solutions to this problem is to drill from the flexible material to the rest of the composite layers. However, this is not always possible and can lead to ergonomic and safety problems in operations. It is particularly impossible when a relatively hard and non-elastic layer is placed between two layers of a more flexible material.

Some specific twist drills for drilling composite materials are known in the present state of the art. For example, the European patent EP2981385 describes a twist drill for drilling composite materials, especially for drilling through holes, where the blade formed in the upper part of the drill has two pitches, the initial and the final pitch, wherein the length of the cylindrical part of the initial pitch is at least 0.5 mm, and its first diameter is shorter than the second diameter of the final pitch by 0.5 - 2 mm, while the angles of the initial pitch and the final pitch range from 60° to 90°. The geometry of the cutting part of the drill bit for composite drilling avoids delamination in the tool exit area often observed in the aircraft industry.

US Patent US2003202853 discloses a stepped drill that minimizes burrs formed during drilling. The reduction of the uncut part of the work minimizes an exit burr, which is formed by advancing a drill into a workpiece and increases the bending deformation during the drilling procedure of the workpiece and the prolongation of the cut without bending until the end of the cut. The blade formed at the top of the drill has two steps, the initial and the finishing step, in which the length (L) of the cylindrical part of the initial step is 2 mm, and its first diameter is shorter than the second diameter of the finishing step by 1 mm, while the tip angle of the initial step has a value of 140° and the tip angle of the finishing step ranges from 60° to 90°.

European Patent EP2535129 provides a step-shaped drill bit including at least two axially staggered cutting edges. A cutting edge of a first step is formed from a tip to satisfy at least one of the following conditions: a number of cutting edges is smaller, a tip angle of the cutting edge is greater or a separation angle of the cutting edge is greater than that of the cutting edges of a second and subsequent steps. As a result, the thrust resistance during a bore can be reduced.

Finally, international application WO2013042914 relates to a cutting tool for a composite material. A drilling tool according to one embodiment includes a drill body and a shank. The drill body includes ribs formed in a spiral shape along the direction of the axis of the drill body, chip discharge slots formed between the ribs, and a drill head formed at an end of the drill body opposite the shank. The drill head is formed in a multiple stage and the first and second cutting edges are formed by interposing a stepped portion therebetween, and the second cutting edge is formed toward the drill head. A tip angle of the first cutting edge is from 90° to 130°, a plate angle of the second cutting edge is from 5° to 15°, and a torsion angle between the chip discharge groove and the rotation axis of the drill body is from 20° to 40°.

## Description of the invention

The object of the invention is a drill bit for drilling a composite material, specially intended for making through holes in composite parts in which the last layer of material is flexible, in order to avoid delamination phenomena which give rise to irregular holes and non-cylindrical geometry.

The main underlying idea is to have a reduced diameter part behind the tip and head of the drill bit. This reduced diameter is beneficial when drilling two layers in a row of a first material and a second material bonded to the first material.

Without this configuration, drilling from the side of the first layer of the material can elastically deform the second elastic layer of the material, resulting in the hole in the second material resulting in an irregular, oval shape.

The drill bit of the invention avoids this result because the tip and the head first penetrate creating an irregular hole. Subsequently, the penetration of the reduced diameter part through the composite material, and its subsequent removal, pushes the layer of elastic material, which is delaminated, back until it is again superimposed against the first layer of material.

So when the part of the drill bit with the diameter of the hole to be drilled arrives, the elastic material is predrilled and against the first material, so that finally a through hole is generated in the composite material which has a perfectly regular and round geometry.

The calculation of the drill geometry is based on the geometrical requirements of the hole, taking into account that the material(s) to be drilled comply with the structural design laws of an embedded beam as a first step.

The detailed calculation of the drill bit geometry is carried out by means of the results of the analysis of the behavior of the material to be drilled using the bending calculation rules of a thin bar embedded at one end with small slope approximation. For this purpose, the differential equation of the elastic for small slopes of the bar is used.

$$\frac{1}{\rho} = \frac{d^2y/dx^2}{[1+(dy/dx)^2]^{3/2}}$$

It is assumed that the displacement of the points of the bent bar with respect to those of the unbent bar is depreciable and that the bar is inextensible, which implies that the length of the bar does not change due to bending.

The following equation is used to calculate the vertical displacement of the bar:

$$\delta_y = \frac{F}{3EI}(L - \delta_x)^3$$

Wherein:

f = Force exerted by the tool on the material.

$\delta x$ = is the displacement in "x" of the position of the centre of the hole to be drilled.

$\delta y$ = is the displacement in "y" of the position of the centre of the hole to be drilled.

E = Young's Modulus of the material

I = Moment of inertia of the bar cross-section

L = Length of the part to be drilled from its embedded point (rib of the beam)

The product EI, which depends on the type of material used and the geometrical characteristics of the bar cross-section, is called the "flexural modulus of rigidity" of the bar.

This solution is an alternative to the known orbital drilling or manual drilling in several steps. For instance, in the field of Carbon-fiber-reinforced polymers this drill bit allows the automation into one single step of the outer mold (OML) and inner mold (IML) lines, and vice versa.

This drill bit also helps in reducing the cost on consumables. First, it allows the use of a lower number of cutting tools, for instance multi step (as today) vs one shot. In turn this feature also permits lead time reduction, thanks to less cutting tool changes per operation. Drilling time is similar or lower than orbital drilling process, depending on the total thickness. It also relaxes the machine or robot accuracy in the spindle or axis, as the orbital movement is not necessary. Finally, the drill bit avoids ergonomic issues due to its improved accessibility.

## Description of the drawings

To complement the description being made and in order to assist in a better understanding of the features of the invention, in accordance with a preferred example of a practical embodiment thereof, there is attached as an integral part of said description a set of drawings in which, by way of illustration and not limitation, the following has been depicted:

Figure 1.- Shows a side view of the drill bit for drilling composite parts, showing its main parameters.

Figure 2.- Shows a detail view of the drilling portion of the drill bit.

Figure 3.- Shows a schematic view of a first step of a drilling process performed with the drill bit in a composite material.

Figure 4.- Shows a schematic view of a second step of a drilling process performed with the drill bit in a composite material.

Figure 5.- Shows a schematic view of a third step of a drilling process performed with the drill bit in a composite material.

Figure 6.- Shows a schematic view of a fourth step of a drilling process performed with the drill bit in a composite material.

**Detailed embodiment of the invention**

There follows, with the aid of the figures referred to above, a detailed explanation of an example of a detailed embodiment of the object of the present invention.

The drill bit for drilling composite parts described is intended for drilling through holes in composite materials comprising at least an outer layer (9) and an inner layer (10) of dissimilar materials. A special use for this drill bit is in the case in which the outer layer (9) is made of a robust material and the inner layer (10) is made of a flexible material. A drill bit of the invention allows to avoid delamination phenomena resulting in irregular holes and non-cylindrical geometry of the through hole.

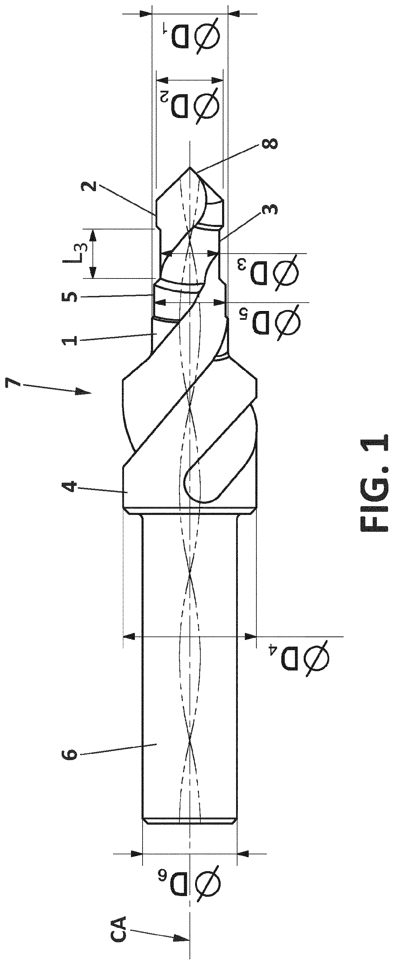

For this purpose, said drill bit, schematically shown in figure 1, comprises a cylindrical drill bit body, in turn comprising a shank (6), located at one end of the drill bit body and which serves for mounting the drill bit in a drilling machine, and a drilling portion (7) located at an end opposite to that on which the shank (6) is located. The shank (6) has a predetermined or standard shank diameter (D6).

The drilling portion (7) has spiral-shaped cutting ribs along the direction of a central axis (CA) of the drill body and chip discharge grooves formed between the ribs. Said drilling portion (7) successively comprises, from a distal end of said drilling portion (7), a head (2) with a tip (8), a first discharge sector (3) and a finishing sector (1).

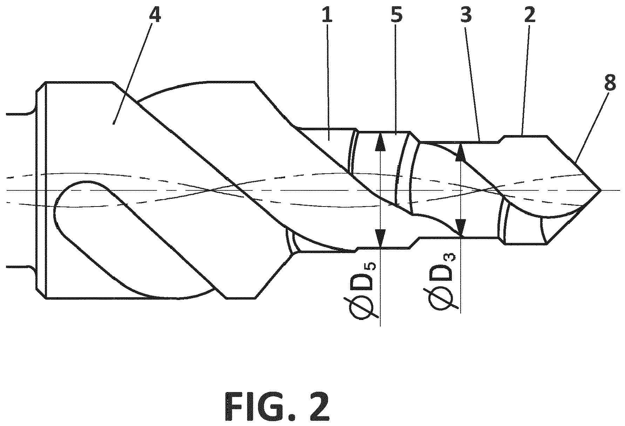

The drilling portion (7) of the drill bit in this preferred embodiment, shown in detail in figure 2, further comprises, located between the first discharge sector (3) and the finishing sector (1), a second discharge sector (5), and a countersinking sector (4) located between the finishing sector (1) and the shank (6).

The head (2) has a head diameter (D2) that determines the diameter of the opening passage of the through hole, which is initially generated with an oval geometry. The tip (8) has a reduced tip angle, which is of 80° in this embodiment. Such angle results in a considerable distribution of the machining force in the radial direction, thus reducing the axial components which are the main factor causing delamination of the composite material.

The first discharge sector (3) has a first discharge diameter (D3) that allows the release of stress and bending in the material to be drilled. This first discharge diameter (D3) is smaller than the head diameter (D2). In this preferred embodiment the relationship between the first discharge diameter (D3) and the head diameter (D2) is $D3 <= 0.7*D2$.

This first discharge sector (3) has a first discharge length (L3) which is linked to the thickness of the composite material (or the combination stacks if the total length is less than 5mm) plus a security coefficient due to the flexion of the inner layer (10).

The finishing sector (1) has a finishing diameter (D1) that determines the finish diameter of the through hole. The finishing diameter (D1) is larger than the first discharge diameter (D3). In this preferred embodiment the relationship with regards to the head diameter (D2) is $D2 <= 0.8*D1$.

This second discharge sector (5) has a second discharge diameter (D5) that allows finishing in tolerance and relaxation of axial force and tension in the composite material to be drilled, such that:

- the second discharge diameter (D5) is smaller than finishing diameter (D1), and
- the second discharge diameter (D5) is larger than the first discharge diameter (D3).

In this preferred embodiment the relationship between the second discharge diameter (D5) and the finishing diameter (D1) is $D5 <= 0.9*D1$.

Finally, the countersinking sector (4) has a countersinking diameter (D4). This countersinking sector (4), which is not present in other embodiments of the drill bit as countersinking is a process for the post-processing of existing drilled holes. Countersinking sector (4) causes deburring or countersinking into the existing drill hole.

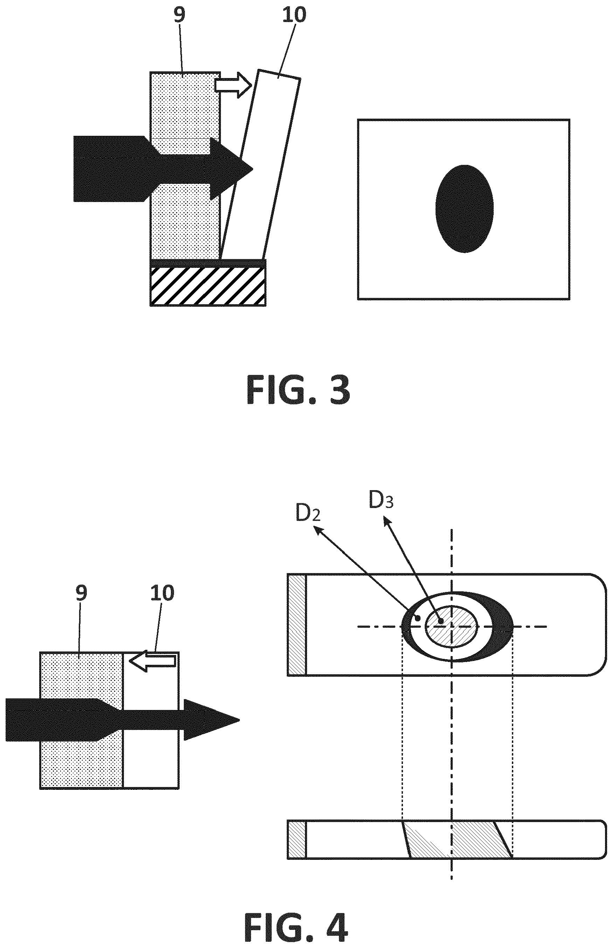

Figures 3-5 shows a schematic view of the steps of a drilling operation carried out with the drill bit thus described on a piece made of composite material, comprising in this case an outer layer (9) of rigid material and an inner layer (10) of flexible material. The through drilling is carried out from the outer layer (9) towards the inner layer (10), as is usual.

Figure 3 shows the first step on which an opening passage of the through hole is opened. As it can be seen, the penetration of the head (2) into the outer layer (9) generates a through hole of oval geometry and causes the separation of the inner layer (10) from the outer layer (9), which is known as delamination.

Figure 4 shows the second step or recess step. It has been demonstrated during tests that it is necessary to give freedom to the component when the oval is finished in order to allow to the components back to the original position and start to perform the final hole with the components in the right position. Therefore, this second step is used to correct the hole position in the "x" axis due to it was unpriced to calculate the step 1.

First discharge sector (3) allows the release of stress and bending in the material and therefore allows the return of the outer layer (9) to its original position, linked to the inner layer (10).

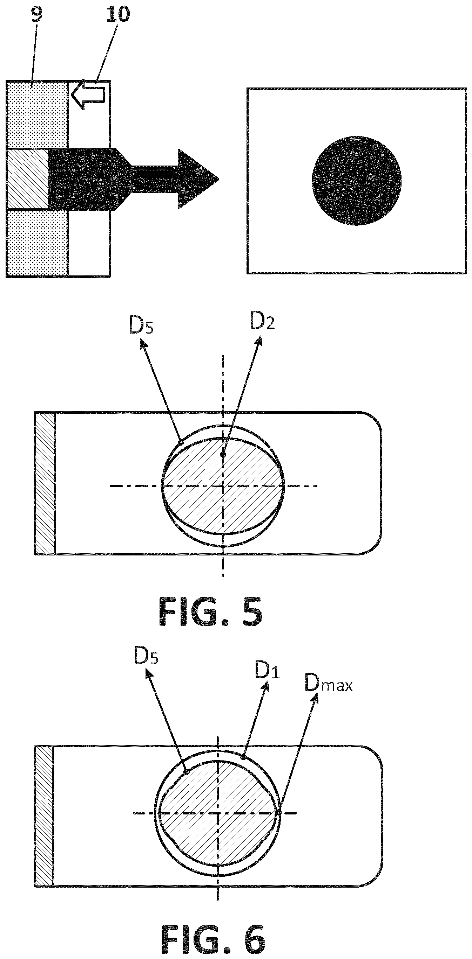

Figure 5 shows the third step or correction of oval step. The second discharge diameter (D5) allows finishing in tolerance and relaxation of axial force and tension in the composite material.

Finally, figure 6 shows the fourth step or final hole step, which is the last step with reamer function. The diameter used for this step, which is the finishing diameter (D1), has to achieve the final hole diameter complying with the tolerances.

**Claims**

1. A drill bit for drilling a composite material comprising at least an outer layer (9) and an inner layer (10) of dissimilar materials, wherein the drill bit comprises a cylindrical drill bit body comprising:

   - a shank (6), located at one end of the drill bit body for mounting the drill bit in a drilling machine; and
   - a drilling portion (7) located at an end opposite the end of the shank (6) and comprising cutting ribs and chip discharge grooves between the ribs;

   the drill bit being 10haracterized in that the drilling portion (7) successively comprises, from a distal end of said drilling portion (7):

   - a head (2) with a head diameter (D2) determining the diameter of an opening passage of a through hole, wherein the head further comprises a tip (8);
   - a first discharge sector (3) with a first discharge diameter (D3) allowing the release of stress and bending in the material to be drilled, the first discharge diameter (D3) being smaller than the head diameter (D2); and
   - a finishing sector (1) with a finishing diameter (D1) determining the through hole final diameter, the finishing diameter (D1) being larger than the first discharge diameter (D3).

2. Drill bit according to claim 1 wherein the drilling portion (7) further comprises, located between the first discharge sector (3) and the finishing sector (1), a second discharge sector (5), with a second discharge diameter (D5) allowing finishing in tolerance and relaxation of axial force and tension in the composite material to be drilled, such that:

   - the second discharge diameter (D5) is smaller than the finishing diameter (D1), and
   - the second discharge diameter (D5) is larger than the first discharge diameter (D3).

3. Drill bit according to any of the preceding claims wherein the drilling portion (7) further comprises a countersinking sector (4) with a countersinking diameter (D4), the countersinking sector (4) being located between the finishing sector (1) and the shank (6).

4. Drill bit according to claim 1 wherein the tip (8) has an angle comprised between 80° and 100°.

5. Drill bit according to claim 1 wherein the relationship between the first discharge diameter (D3) and the head diameter (D2) is D3<=0.7*D2.

6. Drill bit according to claim 1 wherein the relationship between the finishing diameter (D1) and the head diameter (D2) is D2<=0.8*D1.

7. Drill bit according to claim 2 wherein the relationship between the second discharge diameter (D5) and the finishing diameter (D1) is D5<=0.9*D1.

**FIG. 1**

CA

6

$\varnothing D_6$

$\varnothing D_4$

7

6 4 1 5 $L_3$ 2

$\varnothing D_5$ $\varnothing D_3$ 3

8

$\varnothing D_2$ $\varnothing D_1$

EP 4 159 349 A1

**FIG. 2**

**FIG. 3**

$D_2$  $D_3$

**FIG. 4**

**9** **10**

**FIG. 5**

D5   D2

**FIG. 6**

D5   D1   Dmax

Europäisches
Patentamt

European
Patent Office

Office européen
des brevets

# EUROPEAN SEARCH REPORT

Application Number

**EP 21 38 2889**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/051863 A1 (CRAIG KAREN ANNE [US] ET AL) 1 March 2012 (2012-03-01)<br>* abstract *<br>* paragraph [0001] - paragraph [0003] *<br>* paragraph [0007] - paragraph [0010] *<br>* paragraph [0017] - paragraph [0024] *<br>* paragraph [0032] - paragraph [0040] *<br>* figures 1,2,5 * | 1-7 | INV.<br>B23B51/08<br>B23B51/10 |
| X | US 2005/019115 A1 (GATTON GEOFFREY L [US] ET AL) 27 January 2005 (2005-01-27)<br>* abstract *<br>* paragraph [0010] - paragraph [0011] *<br>* paragraph [0022] - paragraph [0027] *<br>* figures 3,4 * | 1,3-6 | |

TECHNICAL FIELDS
SEARCHED      (IPC)

B23B

The present search report has been drawn up for all claims

| Place of search | Date of completion of the search | Examiner |
|---|---|---|
| Munich | 11 March 2022 | Baumgärtner, Ruth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 2889

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2022

| Patent document cited in search report | | Publication date | Patent family member(s) | | Publication date |
|---|---|---|---|---|---|
| US 2012051863 | A1 | 01-03-2012 | CN | 103068508 A | 24-04-2013 |
| | | | DE | 112011102803 T5 | 27-06-2013 |
| | | | US | 2012051863 A1 | 01-03-2012 |
| | | | WO | 2012027057 A2 | 01-03-2012 |
| US 2005019115 | A1 | 27-01-2005 | BR | PI0412794 A | 26-09-2006 |
| | | | JP | 2006528561 A | 21-12-2006 |
| | | | US | 2005019115 A1 | 27-01-2005 |
| | | | WO | 2005009760 A2 | 03-02-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2981385 A
- US 2003202853 A
- EP 2535129 A
- WO 2013042914 A